# EUROPEAN PATENT APPLICATION

(11) **EP 4 535 695 A1**
(43) Date of publication of application: **09.04.2025**
(21) Application number: 23932425.4
(22) Date of filing: 12.04.2023
(51) Int. Cl.: H04L 1/00

(54) **DATA COMMUNICATION METHOD AND APPARATUS, AND TERMINAL AND STORAGE MEDIUM**

(71) Applicant: Han's Laser Technology Industry Group Co., Ltd., Shenzhen, Guangdong 518057 (CN)
(72) Inventor: YIN, Bobo, Shenzhen, Guangdong 518000 (CN); CHEN, Jianlin, Shenzhen, Guangdong 518000 (CN); SU, Guoying, Shenzhen, Guangdong 518000 (CN); XU, Qijian, Shenzhen, Guangdong 518000 (CN); GAO, Yunfeng, Shenzhen, Guangdong 518000 (CN)
(74) Representative: J A Kemp LLP
(86) International application number: PCT/CN2023/087874
(87) International publication number: WO 2024/212133

(57) **Abstract**

A data communication method and apparatus, a terminal, and a storage medium. The method includes: sending, by a transmitter, one or more frames of data to a receiver, each frame of data includes multiple data bits, and each data bit is set to a first signal value or a second signal value; and setting a check bit at a position adjacent to each data bit, where each check bit is set as a signal value the same as or different from the corresponding data bit. **In** the present application, by means of setting the check bit at the position adjacent to each data bit sent by the transmitter, the receiver can conveniently check, in real-time, the data sent by the transmitter, so as to determine whether each data bit has been interfered during transmission, achieving a full-check effect, thus enabling the receiver to detect an incorrect data instruction in time and avoid the execution of the same.

## Description

### TECHNICAL FIELD

The present disclosure relates to the technical field of data communication, and more particularly, to a data communication method and apparatus, a terminal, and a storage medium.

### BACKGROUND

In automated production processes of factories, data transmission of processing equipment is often affected by electromagnetic interference in the working environment or poor contact of the transmission line, etc., resulting in unstable transmission signals or triggering data transmission errors. As a result, the processing equipment is unable to process in accordance with the correct processing instructions, thus affecting the quality of processing, and even causing processing accidents in serious cases.

### SUMMARY

Based on this, the present application discloses a data communication method and apparatus, a terminal, and a storage medium, which can improve the accuracy of data transmission.

The following technical solutions have been adopted in the embodiments.

A data communication method applied to a transmitter includes:
sending, by the transmitter, one or more consecutive frames of data to a receiver, each frame of data comprising multiple data bits, each of the data bits being set to a first signal value or a second signal value; and
setting a check bit at a position adjacent to each data bit, wherein each check bit is set as a signal value the same as or different from the corresponding data bit.

A data communication method applied to a receiver includes:
receiving, by the receiver, one or more consecutive frames of data from a transmitter, and for each frame of data, detecting a signal value of each data bit and a signal value of a check bit adjacent to the data bit; and
in a case that each check bit is preset to a signal value different from its corresponding data bit, determining, by the receiver, that the frame of data is valid when detecting that the signal value of each data bit in the frame of data is different from the check bit adjacent to the data bit, and otherwise, determining that the frame of data is invalid.

Further, in the data communication method, the check bit is set before or after each of the data bits, and the signal value of the check bit is different from the signal value of the corresponding data bit.

Further, in the data communication method, each frame of data further includes a start bit, a number of the start bit is one or more, and the start bit is set before all the data bits and all the check bits in turn.

Further, in the data communication method, each frame of data further includes end bits, a number of the end bits is three or more, and the end bits are set in sequence after all the data bits and all the check bits, and the end bits have the same signal value.

Further, the data communication method further includes:
counting, by the receiver, whether a number of consecutive invalid data frames exceeds a preset value;
if the number of consecutive invalid data frames does not exceed the preset value, ignoring the current invalid data frame, and continuing to receive the next frame of data; and
if the number of consecutive invalid data frames exceeds the preset value, generating a warning.

Further, the data communication method further includes:
sending, by the transmitter, two or more data streams with the same content to the receiver, and each of the data streams includes one or more frames of data.

Further, the data communication method further includes:
receiving, by the receiver, two or more data streams with the same content from the transmitter, and each of the data stream includes one or more consecutive frames of data;
determining whether each frame of data in each of the data streams is valid; and
combining all of the data streams into one data stream, wherein each frame of data in the data stream obtained by the combination is selected from a valid frame of data in the corresponding position of any of the data streams.

Further, the data communication method further includes:
receiving, by the receiver, two or more data streams with the same content from the transmitter, and each of the data stream comprises one or more consecutive frames of data;
combining all of the data stream into one data stream;
when the signal values of the data bits at the same position in different data streams are the same, taking the same signal value as a signal value of a combined data bit directly; and
when the signal values of the data bits at the same position in different data streams are different, taking the signal value with the highest number as the signal value of the combined data bit directly.

A data communication device includes:
a sending module configured to send one or more frames of data, each frame of data includes multiple data bits; and
a setting module configured to set each data bit to a first signal value or a second signal value, and set a check bit at a position adjacent to each data bit, wherein each check bit is set as a signal value the same as or different from the corresponding data bit.

A data communication device includes:
a receiving module configured to receive one or more frames of data, each frame of data comprises multiple data bits
a detection module configured to detect, for each frame of data, a signal value of each data bit and a signal value of a check bit adjacent to the data bit; and
a determination module configured determine, in a case that each check bit is preset to a signal value different from the signal value of the data bit corresponding to the check bit, that the frame of data is valid when the detection module detects that the signal value of each data bit in the frame of data is different from the check bit adjacent to the data bit, and otherwise, determine the frame of data is invalid.

A terminal includes a memory and a processor, the memory has a computer program stored therein, the processor executes the computer program to implement any of the data communication methods as described above.

A computer-readable storage medium is provided, the computer-readable storage medium has computer-executable instructions stored therein, the computer-executable instructions being configured to execute any of the data communication methods as described above.

Comparing with the existing technology, in the data communication methods and apparatuses, the terminal, and the storage medium provided in the present application, by setting a check bit in the adjacent bit of each data bit sent by the transmitter, the receiver can conveniently check the data sent by the transmitter in time, and determine whether each bit of data has been interfered during transmission, achieving a full-check effect, thus enabling the receiver to detect incorrect data instructions in time and avoid the execution of the same.

### BRIEF DESCRIPTION OF THE DRAWINGS

FIG. 1 is a flow diagram illustrating a data communication method applied to a transmitter provided in the present application.
FIG. 2 is a flow diagram illustrating a data communication method applied to a receiver provided in the present application.
FIG. 3 is a framework diagram illustrating a specific embodiment of the data communication method provided in the present application.
FIG. 4 is a flow diagram illustrating steps S600B2-S900B2 of the data communication method provided in FIG. 2.
FIG. 5 is a diagram illustrating a hardware circuit of an existing XY2-100 digital protocol.
FIG. 6 is a framework diagram of the existing XY2-100 digital protocol.
FIG. 7 is a structural block diagram illustrating a data communication apparatus (a transmitter) provided in the present application.
FIG. 8 is a structural block diagram illustrating a data communication apparatus (a receiver) provided in the present application.
FIG. 9 is a structural block diagram illustrating a terminal.

### DETAILED DESCRIPTION OF THE EMBODIMENTS

In order to make the purpose, technical solutions, and effects of the present application clearer and more explicit, the present application will be described in further detail hereinafter with reference to the accompanying drawings and embodiments. It should be understood that the specific embodiments described herein are for the purpose of explaining the present application only and are not intended to limit the present application, and those elements, structures and features in one embodiment may be beneficially combined in other embodiments as well without further recitation.

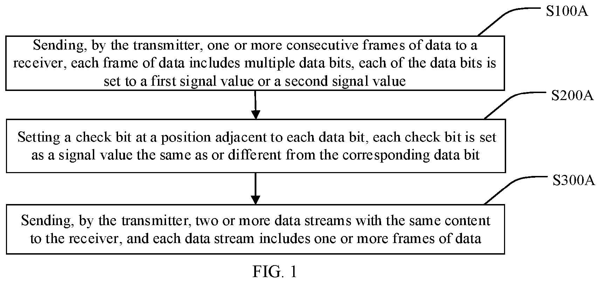

Referring to FIG. 1, the present application provides a data communication method applicable to a data transmitter, and the data communication method includes the following steps S100A and S200A.

In step S100A, one or more consecutive frames of data is sent from the transmitter to a receiver, each frame of data includes multiple data bits, and each data bit is set to a first signal value or a second signal value.

In step S200A, a check bit is set at a position adjacent to each data bit, and each check bit is set to be a signal value that is the same as or different from the corresponding data bit.

In processing equipment, the transmitter is typically a control unit, and the receiver is typically an execution unit. The control unit can send relevant data containing control instructions to the execution unit via a signal transmission line. The execution unit receives the control instructions and executes the corresponding processing action. For example, an industrial control computer sends control instruction signals to a laser processing head so that the laser processing head processes a workpiece along a preset trajectory.

Each frame of data is a protocol data unit during data transmission as defined by the present application, and each frame of data includes a start section, a data section, and an end section. The start section and the end section include necessary control information, and the data section includes a number of consecutive data bits.

Bit is the smallest unit of data storage, i.e., 1bit. The first signal value and the second signal value are represented as two different states, such as 0 and 1, which represent a low level and a high level, respectively. By setting the number of data bits and the combination of 0s and 1s in each frame of data, each frame of data can express the information to be transmitted, for example, control instruction information during processing.

During data transmission of processing equipment, electromagnetic interference or poor contact of the transmission line, etc., may occur, resulting in unstable transmission signals or triggering data transmission errors. As a result, the processing equipment is unable to process in accordance with the correct processing instructions, thus affecting the quality of processing.

In the present application, a check bit is set at the position adjacent to (before or after) each valid data bit. In this way, each valid data bit can be checked during data communication, achieving a full checksum, thus avoiding data transmission errors.

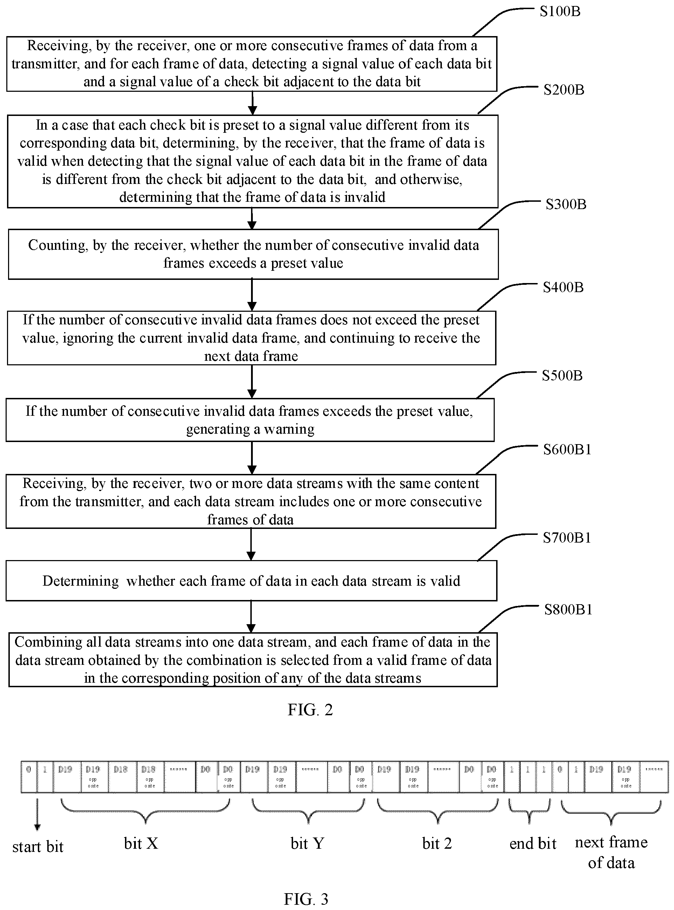

Referring to FIG. 2, the present application provides a data communication method applicable to a data receiver, and the data communication method includes the following steps S100B and S200B.

In step S100B, the receiver receives one or more consecutive frames of data from a transmitter, and for each frame of data, detects the signal value of each data bit and the check bit adjacent to the data bit.

In step S200B, in the case that each check bit is preset to a signal value different from its corresponding data bit, it is determined that the frame of data is valid when the receiver detects that the signal value of each data bit in the frame is different from its adjacent check bit, otherwise, it is determined that the frame of data is invalid.

For example, a check bit may be set in a position after its corresponding data bit. In a case that a data bit is originally set to the first signal value, the corresponding check bit is set to the second signal value, i.e., the data bit and its corresponding check bit are represented as 01. If the signal value of each data bit in a frame of data is different from the check bit adjacent thereto, it indicates that all data bits are not interfered, i.e., the frame of data is valid.

In a case where the data bit is interfered and changes from the first signal value to the second signal value during data transmission, the signal values of the data bit and the check bit are changed from different to the same. In this case, the data bit and its corresponding check bit are represented as 11. Upon detecting this change, the receiver determines that the data bit is incorrect. Due to the data bit errors, the information expressed by the corresponding frame of data is also incorrect, rendering this frame of data is determined to be invalid data.

The above data communication methods can be applied in various fields, especially in the field of automatic processing that requires real-time control, such as the field of laser processing and computer numerical control machining.

In specific embodiments, the method will be illustrated by taking the application of the method to a laser marking system as an example. The laser marking system includes an industrial control computer, a galvo head, a marking control card, and a pulsed laser, etc. During marking, the X, Y and Z axes are calibrated in the marking software of the industrial control computer, and then the industrial control computer sends control instructions through the marking control card to control the galvo head, so that the laser beam moves on the object to be marked, so as to realize a two-dimensional or three-dimensional marking effect.

When there is a problem with the signal received by the galvo head, the movement position of the laser in the X, Y and Z directions of the object to be marked will also deviate, thus affecting the marking effect, or even make the marking material scrap, resulting in serious losses. For example, in a case where a laser marking system is used to weld metal seams on a lithium battery casing, when the galvo head receives an erroneous signal and stays in place, the laser beam will continue to emit light in one position at the seam, easily causing the laser to burn through the case of the lithium battery and causing a fire or explosion.

The galvo head can determine whether each bit of data of the processing instruction is interfered during transmission in real time by monitoring the signal value of each data bit and the signal value of the adjacent check bit sent by the marking control card in real time, achieving the full checksum, timely identifying the incorrect instructions and avoiding the execution of the incorrect instructions, thus avoiding impacting on processing quality and safety problems.

The ways in which the transmitter sends data to the receiver include wired transmission and wireless transmission. The wired transmission includes differential transmission, optical fiber transmission, and single-ended transmission, etc. The wireless transmission includes local area network transmission, 5G transmission, Bluetooth transmission, etc. When each check bit is set to a signal value different from the corresponding data bit, a DC balancing effect can be achieved, further enhancing the line's anti-interference capability.

It can be understood that each check bit can also be set to have the same signal value as the corresponding data bit according to actual needs. In this case, if all the data bits in a frame of data are detected to have the same signal values as the corresponding adjacent check bits, the frame of data is determined to be valid, otherwise the frame of data is determined to be invalid.

In some embodiments, each frame of data also includes at least one start bit. The number of the start bit is one or more, and the start bit is set before all data bits and all check bits in turn.

Each frame of data also includes end bits. In a case where the number of the check bit is one and the signal value of the check bit is different from the corresponding data bit, the number of the end bits can be set to three or more, and the end bits are set after all data bits and all check bits in turn, and the end bits have the same signal value.

Data communication method using asynchronous communication in the present application, the start bit and the end bit are configured to find the header and tail of each frame of data, respectively. Unlike synchronous communication protocols, it does not require a high-quality clock signal and coordinated timing in the line. As long as the start bit and the end bit are received by the receiver, the intermediate data bits can be defaulted to useful data.

During the transmission of each frame of data, the transmitter first sends the start bit of the data to the receiver, and the start bit may be a logic 0 (low level) that lasts for one bit time, causing the data line in the low-level state of logic 0, prompting the receiver that data transmission is about to begin. Then, the transmitter sends the data of the data bits and check bits, and the information to be transmitted can be expressed according to the number of data bits and the combination of 0s and 1s. Finally, the transmitter sends data of a stop bit to indicate the end of the data transmission of the current frame, at this time, the stop bit can cause the data line to be in the high-level sate of logic 1.

Since the signal value of each data bit is different from its corresponding check bit, under normal circumstances, the data section can only have at most two consecutive data bits with the same signal value, such as 10011001..., 01100110..., etc. In this case, the stop bit is set to a minimum of three bits, which may be 111, 1111, etc. In this way, the consecutive stop bits can be clearly distinguished from the data bits, making them easy to be recognized by the receiver

Specifically, referring to FIG. 3, in an embodiment where the data communication methods are applied to a laser marking system, each frame of data in each data stream includes 125 bits, including two start bits 01, three end bits 111, and 120 intermediate bits. The 120 intermediate bits are divided into three groups, each of the groups includes 20 data bits, and the three groups represent the position data of the X, Y, and Z axis galvos, respectively. Each data bit is followed by a check bit that is an inverted bit of the data bit. The check bit can be configured to check whether the corresponding data bit is correct, and can also be configured to perform DC balancing on the transmission line.

In some embodiments, in the case that the data communication method is applied to a data receiver, the data communication method further includes the following steps S300B to S500B.

In step S300B, the receiver counts whether the number of consecutive invalid data frames exceeds a preset value.

In step S400B, if the number of consecutive invalid data frames does not exceed the preset value, all the invalid data frames are ignored and a next data frame is continued to be received.

In step S500B, if the number of consecutive invalid data frames exceeds the preset value, a warning is generated.

The receiver can monitor in real time whether each frame of data sent by the transmitter is interfered during transmission. A specific value, i.e., the preset value, is set in advance. The receiver records whether the number of consecutive invalid data frames exceeds the preset value during data transmission, and generates a warning to notify the operator when the number of consecutive invalid data frames exceeds the preset value.

By increasing the range of the preset value, the continuity of data transmission can be improved to, avoid frequent alarms. In addition, the accuracy of data transmission can be improved by narrowing the range of the preset values.

Taking the laser marking system as an example, due to the inertia of the movement of the galvo head, when the galvo head receives a frame of invalid data, the movement of the galvo head and the processing quality will not be significantly affected even if the control instructions expressed in the frame of data are not executed.

Therefore, in a case that the number of consecutive invalid data frames does not reach the preset value, the galvo head can ignore the current invalid data frame and continue to receive the next data frame, avoiding frequent error reporting by the galvo head and improving processing efficiency.

In some embodiments, with continued reference to FIG. 1, the data communication method applicable to the data transmitter also includes the following step S300A.

In step S300A, two or more data streams with the same content are sent from the transmitter to the receiver, and each of the data streams includes one or more frames of data.

By sending multiple identical data streams at the same time by the transmitter, even if there is interference during data transmission, the receiver can receive the correct data as long as any one of the data streams is transmitted normally.

In some embodiments, with continued reference to FIG. 2, the data communication method applicable to the data receiver also includes the following steps S600B1 to S800B2.

In step S600B1, , the receiver receives two or more data streams with the same content sent by the transmitter, and each of the data streams includes one or more consecutive frames of data.

In step S700B2, it is determined whether each frame of data in each data stream is valid.

In step S800B2, all of the data streams are combined into one data stream, and each frame of data in the data stream obtained by the combination is selected from a valid frame of data in the corresponding position of any of the data streams.

The receiver receives multiple identical data streams at the same time. Even if there is interference during data transmission, the receiver can receive the correct data as long as any one of the data streams is transmitted normally.

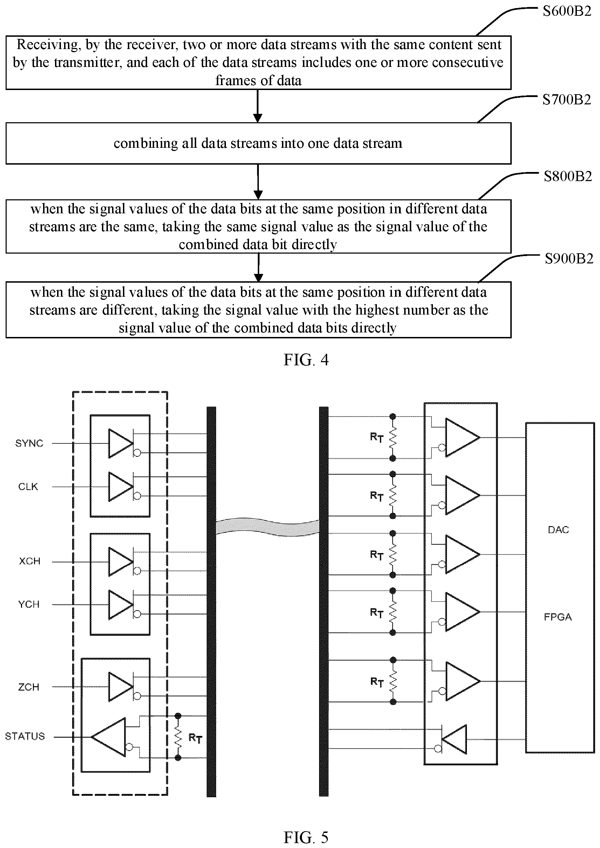

Alternatively, referring to FIG. 4, the data communication method applicable to the data receiver alternatively includes the following steps S600B2 to S900B2.

In step S600B2, the receiver receives two or more data streams with the same content sent by the transmitter, and each of the data streams includes one or more consecutive frames of data.

In step S700B2, all of the data streams are combined into one data stream.

In step S800B2, when the signal values of the data bits at the same position in different data streams are the same, the same signal value is taken as the signal value of the combined data bit directly.

In step S900B2, when the signal values of the data bits at the same position in different data streams are different, the signal value with the highest number is taken as the signal value of the combined data bit directly.

In other words, a voting strategy is applied to the multiple data streams, and the signal value of each data bit in the data stream finally obtained by the combination is the signal value that appears most times in the multiple data streams. For example, the galvo head receives three data streams sent by the industrial control computer at the same time, the current data bit in one data stream is 0, and the current data bit in the other two data streams are 1, then 1 is taken as the current data bit of the data stream obtained by the combination, and the receiver defaults to the transmitter sending a high-level data.

In specific embodiments, when the data communication method provided in the present application is applied in the field of laser processing, conventional communication modes, such as hardware circuits for communication protocols such as the XY2-100 digital communication protocol or the SL2-100 digital communication protocol, etc., can be directly used.

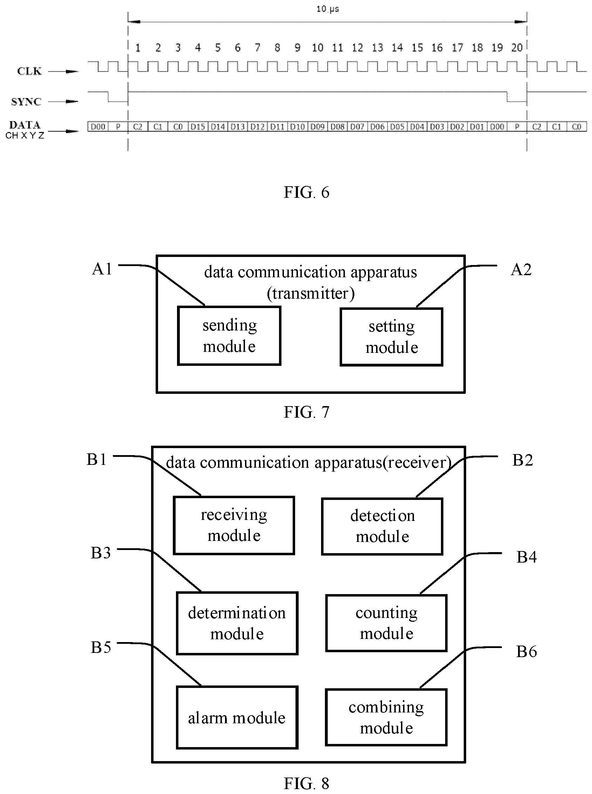

Referring to FIG. 5 and FIG. 6, the XY2-100 digital protocol is a common synchronous transmission protocol used in laser processing, At the rising edge of the synchronization signal *sync,* the signal of the first data bit is transmitted, then the synchronization signal is kept at the high-level for 19 data bits. Position data is written into the data *DATA* at the rising edge of the clock signal *Clock,* and the data is sampled by the galvo head at the falling edge of the clock signal. *XCH, YCH, ZCH* are position data of the X, Y, Z axis galvos, respectively. *STATUS* is the galvo feedback signal. Each frame of data *DATA* includes twenty data bits, the first three data bits (C2-C0) are control bits, the next 16 data bits (D15-D0) are the position data in the form of shifted codes, and the last data bit (P) is an even check bit.

Based on the hardware circuit of the XY2-100 digital protocol, the data communication method disclosed in the present application can be directly adopted. A differential chip (e.g., AM26LV32) is adopted to remove the SYNC / Clock / XCH / YCH / ZCH signals used in the synchronous communication, and the five channels are used for transmitting the data streams in the present application. When the industrial control computer transmits the five data streams to the galvo head through the control card at the same time, theoretically, the five streams received by the galvo head are the same. If one or more data streams are interfered, as long as one of the data streams is transmitted normally, the galvo head can receive the signal from the control card normally.

In the five-channel signal transmission scheme, a voting module may be arranged before the receiver in the galvo head, and a voting scheme can be adopted: upon determining that three or more signals of the five received signals are at the high-level or low level, the galvo head determines that the marking control card has transmitted a high-level signal or a low-level signal.

In this way, the present application provides a communication method that can be used as a communication protocol with enhanced interference immunity implemented on the hardware facilities of conventional communication protocols, without requiring a high-quality clock signal and coordinated timing in the line. Once the start bit and the end bit are received by the receiver, the intermediate data bits can be defaulted to useful data. Furthermore, since each data bit is followed by a check bit, the receiver can detect and check each data bit sent by the control card in real time. In addition, this inverted data bit can also be used to perform DC balancing on the transmission line, further enhancing the immunity of the signal transmission.

Referring to FIG. 7, the present application also provides a data communication apparatus (a transmitter), and the data communication apparatus includes:
a sending module A1 configured to send one or more consecutive frames of data, each frame of data includes multiple data bits; and
a setting module A2 configured to set each data bit to a first signal value or a second signal value, set a check bit at a position adjacent to each data bit, and each check bit is set to be a signal value the same as or different from the corresponding data bit.

The sending module A1 and the setting module A2 are applied to a control unit, such as a marking control card in a laser marking system. The marking control card is provided with a corresponding control circuit or chip to realize the functions of the sending module A1 and the setting module A2.

Each frame of data sent by the sending module A1 further includes at least one start bit. The number of the start bit is one or more, and the start bits are set in sequence before all data bits and all check bits.

In addition, each frame of data also includes end bits. In a case where the number of the check bit is one and the signal value of the check bit is different from the corresponding data bit, the number of the end bits can be set to three or more, the end bits are set in sequence after all data bits and all check bits, and end bits have the same signal value.

In some embodiments, the sending module A1 in the data communication apparatus (the transmitter) is further configured to send two or more data streams with the same content, and each of the data streams includes one or more frames of data.

By sending multiple identical data streams at the same time by the sending module A1, even if there is interference during data transmission, the receiver can receive the correct data as long as any one of the data streams is transmitted normally.

Referring to FIG. 8, the present application also provides a data communication apparatus (a receiver), and the data communication apparatus includes:
a receiving module B1 configured to receive one or more frames of data, each frame of data includes multiple data bits;
a detection module B2 configured to detect a signal value of each data bit and a signal value of a check bit adjacent to the data bit in each frame of data; and
a determination module B3 configured to determine, in a case that each check bit is preset to a signal value different from its corresponding data bit, that the frame of data is valid when the detection module detects that the signal value of each data bit in the frame is different from its adjacent check bit, and otherwise, determine that the frame of data is invalid.

The receiving module B1, the detection module B2, and the determination module B3 are applied to an execution unit, such as a galvo head in a laser marking system. The galvo head is provided with corresponding control circuits or chips inside to realize the functions of the receiving module B1, the detection module B2 and the determination module B3.

In some embodiments, the data communication apparatus (the receiver) also includes:
a counting module B4 configured to count the number of consecutive invalid data frames; and
an alarm module B5 configured to generate an alarm to indicate errors.

If the determination module B3 determines that the number of consecutive invalid data frames counted by the counting module B4 does not exceed a preset value, the receiving module B1 ignores the current invalid data frame and continues to receive the next frame of data. If the determination module B3 determines that the number of consecutive invalid data frames counted by the counting module B4 exceeds the preset value, an alarm is generated by the alarm module B5.

In some embodiments, the receiving module B1 in the data communication apparatus (the receiver) is further configured to receive two or more data streams with the same content from the transmitter, and each of the data streams includes one or more consecutive frames of data.

In addition, the data communication apparatus (the receiver) also includes:
a combining module B6 configured to combine all of the data streams into one data stream.

Firstly, the determination module B3 determines whether each frame of data in each data stream is valid, and then the combining module B6 combines all of the data streams into one data stream, where each frame of data in the data stream obtained by the combination is selected from a valid frame of data in the corresponding position of any of the data streams.

Alternatively, in some embodiments, when the signal values of the data bits at the same position in different data streams are the same, the combining module B6 uses the same signal value as the signal value of the combined data bit directly.

When the signal values of the data bits at the same position in different data streams are different, the combining module B6 uses the signal value with the highest number as the signal value of the combined data bit directly.

The present application also provides a non-transitory computer-readable storage medium, the non-transitory computer-readable storage medium has computer-executable instructions stored therein, and the computer-executable instructions is configured to execute a data communication method as described in the above embodiments.

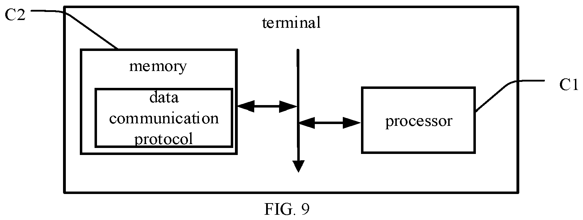

Referring to FIG. 9, the present application also provides a data terminal, the data terminal includes: at least one central processor C1, for example, one central processor C1 is shown in FIG.9; a memory C2; and transmission lines and communication interfaces. The central processor C1, the memory C2, and the communication interface can communicate with each other via the transmission lines. The communication interfaces can transfer information. The central processor C1 can invoke the logic instructions in the memory C2 to perform the data communication method in the above embodiments.

The central processor C1 may be a Central Processing Unit (CPU). The central processor C1 may alternatively be other general-purpose processors, Digital Signal Processor (DSP), Application Specific Integrated Circuit (ASIC), Field-Programmable Gate Array (FPGA), other programmable logic device, discrete gate, transistor logic device or discrete hardware components, etc.

In addition, the logic instructions in the above-described memory C2 can be stored in a computer-readable storage medium when they can be realized in the form of a software function unit and sold or used as a separate workpiece.

The memory C2, as a computer-readable storage medium, can be configured for storing a software program and a computer-executable program, such as a program instruction or module corresponding to the methods in the embodiment of the present application. The central processor C1 executes a functional application as well as data processing, i.e., realizes the methods in the above embodiments, by running the software program, instruction or module stored in the memory C2.

The memory C2 may include a program storage area and a data storage area, the program storage area may store an operating system and an application program required for at least one function. The data storage area may store data created in accordance with the use of the terminal device, etc. In addition, the memory C2 may include a high-speed random access memory, and can also include a non-volatile memory.

All or part of the steps of the above embodiments can be implemented by hardware, or by instructing relevant hardware through a program. The program may be stored in a computer-readable storage medium, which may be a non-transitory storage medium including a USB flash drive, a removable hard disk, a Read-Only Memory (ROM), a Random Access Memory (RAM), a disk or a CD-ROM, and many other medium that can store the program code, or may also be a transient storage medium.

It should be understood for those of ordinary skills in the art, equivalent substitutions or alterations can be made to the technical solutions and inventive concept of the present application, all of which should fall within the scope of protection of the claims appended to the present application.

## Claims

1. A data communication method applied to a transmitter, **characterized by** comprising:
sending, by the transmitter, one or more consecutive frames of data to a receiver, each frame of data comprising multiple data bits, each of the data bits being set to a first signal value or a second signal value; and
setting a check bit at a position adjacent to each data bit, wherein each check bit is set as a signal value the same as or different from the corresponding data bit.

2. A data communication method applied to a receiver, **characterized by** comprising:
receiving, by the receiver, one or more consecutive frames of data from a transmitter, and for each frame of data, detecting a signal value of each data bit and a signal value of a check bit adjacent to the data bit; and
in a case that each check bit is preset to a signal value different from its corresponding data bit, determining, by the receiver, that the frame of data is valid when detecting that the signal value of each data bit in the frame of data is different from the check bit adjacent to the data bit, and otherwise, determining that the frame of data is invalid.

3. The data communication method of claim 1 or 2, wherein the check bit is set before or after each of the data bits, and the signal value of the check bit is different from the signal value of the corresponding data bit.

4. The data communication method of claim 1 or 2, wherein each frame of data further comprises a start bit, a number of the start bit is one or more, and the start bit is set before all the data bits and all the check bits in turn.

5. The data communication method of claim 3, wherein each frame of data further comprises end bits, a number of the end bits is three or more, the end bits are set in sequence after all the data bits and all the check bits, and the end bits have the same signal value.

6. The data communication method of claim 2, further comprising:
counting, by the receiver, whether a number of consecutive invalid data frames exceeds a preset value;
if the number of consecutive invalid data frames does not exceed the preset value, ignoring a current invalid data frame, and continuing to receive a next frame of data; and
if the number of consecutive invalid data frames exceeds the preset value, generating a warning.

7. The data communication method of claim 1, further comprising:
sending, by the transmitter, two or more data streams with the same content to the receiver, and each of the data streams comprises one or more frames of data.

8. The data communication method of claim 2, further comprising:
receiving, by the receiver, two or more data streams with the same content from the transmitter, and each of the data stream comprises one or more consecutive frames of data;
determining whether each frame of data in each of the data streams is valid; and
combining all of the data streams into one data stream, wherein each frame of data in the data stream obtained by the combination is selected from a valid frame of data in the corresponding position of any of the data streams.

9. The data communication method of claim 2, wherein further comprising:
receiving, by the receiver, two or more data streams with the same content from the transmitter, and each of the data stream comprises one or more consecutive frames of data;
combining all of the data stream into one data stream;
when the signal values of the data bits at the same position in different data streams are the same, taking the same signal value as a signal value of a combined data bit directly; and
when the signal values of the data bits at the same position in different data streams are different, taking the signal value with the highest number as the signal value of the combined data bit directly.

10. A data communication apparatus, **characterized by** comprising:
a sending module configured to send one or more frames of data, each frame of data comprises multiple data bits; and
a setting module configured to set each data bit to a first signal value or a second signal value, and set a check bit at a position adjacent to each data bit, wherein each check bit is set as a signal value the same as or different from the corresponding data bit.

11. A data communication apparatus, **characterized by** comprising:
a receiving module configured to receive one or more frames of data, each frame of data comprises multiple data bits;
a detection module configured to detect, for each frame of data, a signal value of each data bit and a signal value of a check bit adjacent to the data bit; and
a determination module configured determine, in a case that each check bit is preset to a signal value different from the signal value of the data bit corresponding to the check bit, that the frame of data is valid when the detection module detects that the signal value of each data bit in the frame of data is different from the check bit adjacent to the data bit, and otherwise, determine the frame of data is invalid.

12. A terminal, comprising a memory and a processor, the memory having a computer program stored therein, and the processor executes the computer program to implement the data communication method of any one of claims 1 to 9.

13. A computer-readable storage medium having computer-executable instructions stored therein, the computer-executable instructions being configured to execute the data communication method of any one of claims 1 to 9.
